Europäisches Patentamt

European Patent Office

Office européen des brevets

(11) Veröffentlichungsnummer: **0 410 232 A2**

# (12) EUROPÄISCHE PATENTANMELDUNG

(21) Anmeldenummer: **90113441.1**

(22) Anmeldetag: **13.07.90**

(51) Int. Cl.5: **G02B 7/10**

(30) Priorität: **22.07.89 DE 3924269**

(43) Veröffentlichungstag der Anmeldung:
**30.01.91 Patentblatt 91/05**

(84) Benannte Vertragsstaaten:
**DE ES FR GB IT**

(71) Anmelder: **Firma Carl Zeiss**

**D-7920 Heidenheim (Brenz)(DE)**
(84) **DE**

Anmelder: **CARL-ZEISS-STIFTUNG trading as CARL ZEISS**

**D-7920 Heidenheim (Brenz)(DE)**
(84) **GB**

(72) Erfinder: **Marx, Dieter**
**Neuffenweg 18**
**D-7080 Aalen-Waldhausen(DE)**
Erfinder: **Kampf, Axel**
**An der Poststeige 17**
**D-7923 Königsbronn(DE)**

(54) **Antrieb und Steuerung zur Verschiebung von optischen Gliedern in einem IR-Pankraten.**

(57) Für ein pankratisches IR-Objektiv wird ein Antrieb für die verstellbaren optischen Glieder angegeben, der es erlaubt, den Brennweitenbereich in 0,5 Sekunden zu durchfahren. Der Antrieb besteht aus einer rotierenden Trommel, an der ein Stahlband befestigt ist, welche die Rotationsbewegung der Trommel in eine Linearbewegung umwandelt und bei ihrer Bewegung eines der mittleren optischen Glieder des pankratischen Objektivs mitnimmt. Mit der Bewegung dieses mit dem Band befestigten optischen Gliedes ist über eine Kurvensteuerung die Bewegung des zweiten mittleren optischen Gliedes des pankratischen Objektives gekoppelt.

Fig. 1

## ANTRIEB UND STEUERUNG ZUR VERSCHIEBUNG VON OPTISCHEN GLIEDERN IN EINEM IR-PANKRATEN

Die Erfindung betrifft ein pankratisches Objektiv für Beobachtungen im IR-Wellenlängenbereich (IR-Pankrat) mit einem vorderen optischen Glied, einem hinteren optischen Glied und zwei relativ zueinander verstellbaren mittleren optischen Gliedern.

Infrarot-Objektive werden als pankratische Systeme ausgeführt, um einerseits die defokussierende Wirkung von Temperaturschwankungen kompensieren und andererseits um Brennweitenänderungen bei schnell sich entfernenden Zielen, beispielsweise Flugkörpern, vornehmen zu können.

Es ist bekannt, die mittleren optischen Glieder eines Infrarot-Objektives motorisch über Getriebe, Gewindespindeln und Steuerkurven zu verstellen. Ein derartiges pankratisches Infrarot-Objektiv ist beispielsweise aus der FR 2 586 828 bekannt. Nachteilig bei diesem bekannten IR-Pankraten ist allerdings, daß die Verstellgeschwindigkeit der optischen Glieder nicht ausreicht, um ein schnell bewegtes Ziel, beispielsweise einen Flugkörper oder eine Rakete, auf der durch den gesamten Brennweitenbereich erfaßbaren Strecke scharf abzubilden.

Der Erfindung liegt deshalb die Aufgabe zugrunde, einen Antrieb und eine Steuerung für einen IR-Pankraten anzugeben, die es erlauben den Brennweitenbereich in 0,5 Sekunden zu durchfahren.

Diese Aufgabe wird erfindungsgemäß dadurch gelöst, daß eines der mittleren verstellbaren optischen Glieder des Pankraten mit einem am Umfang einer rotierbaren Trommel befestigten Band, das die Rotationsbewegung der Trommel in eine Linearbewegung umwandelt, verbunden und mit dem anderen verstellbaren mittleren optischen Glied des Pankraten über eine Zwangsführung der Bewegung gekoppelt ist.

Zweckmäßigerweise wird die Trommel von einem in ihrem Innern angeordneten Torque-Motor in Rotation versetzt.

Vorteilhafterweise sind die mittleren verstellbaren optischen Glieder des Pankraten über Halterungen in einer Längsführung gelagert.

Ein zweckmäßiges Ausführungsbeispiel der Erfindung zeichnet sich dadurch aus, daß eines der verstellbaren optischen Glieder mit einem Stahlband verbunden ist, daß sich an seiner Halterung ein Stift befindet, der in eine erste Kurve eingreift, die in einer mit der Längsführung drehbar verbundenen Schwinge angeordnet ist und daß sich an der Halterung des anderen verstellbaren optischen Gliedes ebenfalls ein Stift befindet, der in eine zweite Kurve in der Schwinge eingreift und dieses zweite verstellbare optische Glied relativ zum ersten verstellbaren optischen Glied bewegt.

Mit Hilfe eines an der Trommel angeordneten Stellungsgebers, beispielsweise einem Potentiometer, läßt sich über vorgegebene Regelkurven der zeitliche Ablauf der Verstellungen beliebig regeln.

In einem zweckmäßigen Ausführungsbeispiel der Erfindung ist der Durchmesser der Trommel so bemessen, daß eine 3/4 Umdrehung dem gesamten Verstellbereich des optischen Gliedes entspricht.

Ein Ausführungsbeispiel der Erfindung ist in der Zeichnung dargestellt und wird im folgenden näher beschrieben. Es zeigen

Figur 1 die schematische Darstellung eines IR-Pankraten mit einem Antrieb zur Verstellung der mittleren optischen Glieder;

Figur 2 einen Schnitt durch die in Figur 1 dargestellte Vorrichtung entlang der Linie II-II.

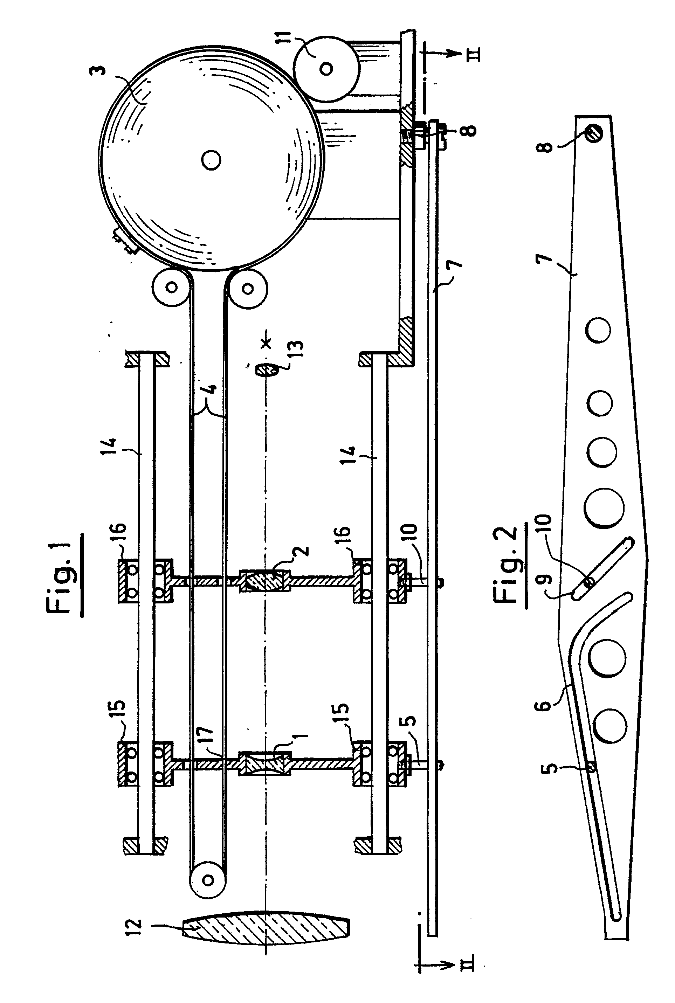

In der Darstellung der Figur 1 ist mit dem Bezugszeichen (12) die Frontlinse eines pankratischen Objektivs bezeichnet, mit (13) die hintere Linse. Die mittleren Linsen (1) und (2) des Pankraten sind in Halterungen (15, 16) in einer Längsführung (14) gelagert. Mit (3) ist eine Trommel bezeichnet, die von einem nicht sichtbaren Torque-Motor in ihrem Innern in Rotation versetzt werden kann. Am Umfang der Trommel (3) ist ein Stahlband (4) befestigt, das die Rotationsbewegung der Trommel in eine Linearbewegung umwandelt. Der Durchmesser der Trommel ist so bemessen, daß eine 3/4 Umdrehung dem gesamten Verstellbereich des optischen Gliedes (1) entspricht. Mit dem optischen Glied (1) ist das Stahlband (4) an der mit (17) bezeichneten Stelle fest verbunden. Bei Drehung der Trommel erfolgt dadurch eine Bewegung des optischen Gliedes (1) längs der optischen Achse. An der Halterung (15) des optischen Gliedes (1) befindet sich ein Stift (5), der in eine Kurve (6), die sich in der Schwinge (7) befindet, eingreift. Bewegt sich nun der Stift längs der optischen Achse, so erfährt die Schwinge (7) eine Auslenkung um ihren Drehpunkt (8). In der Schwinge (7) befindet sich noch eine zweite Kurve (9), die über den an der Halterung (16) befestigten Stift (10) bei Auslenkung der Schwinge (7) das optische Glied (2) relativ zum optischen Glied (1) bewegt. Die Kurven (6) und (9) können so ausgelegt werden, daß die Relativbewegung der beiden optischen Glieder entsprechend den in der optischen Rechnung vorgegebenen Werten erfolgt. Der zeitliche Ablauf der Verstellung läßt sich über ein als Stellungsgeber (11) wirkendes Potentiometer beliebig regeln.

### Ansprüche

1. IR-Prankrat mit einem vorderen optischen Glied (12), einem hinteren optischen Glied (13) und zwei relativ zueinander verstellbaren mittleren optischen Gliedern (1, 2), dadurch gekennzeichnet, daß eines der mittleren optischen Glieder (1) mit einem am Umfang einer rotierbaren Trommel (3) befestigten Band (4), das die Rotationsbewegung der Trommel (3) in eine Linearbewegung umwandelt, verbunden und mit dem anderen mittleren optischen Glied (2) über eine Zwangsführung der Bewegung gekoppelt ist.

2. IR-Pankrat nach Anspruch 1, dadurch gekennzeichnet, daß die Trommel (3) von einem in ihrem Innern angeordneten Torque-Motor in Rotation versetzt wird.

3. IR-Pankrat nach Anspruch 2, dadurch gekennzeichnet, daß die mittleren optischen Glieder (1, 2) über Halterungen (15, 16) in einer Längsführung (14) gelagert sind.

4. IR-Pankrat nach Anspruch 3, dadurch gekennzeichnet, daß eines der optischen Glieder (1) mit einem Stahlband (4) verbunden ist, daß sich an seiner Halterung (15) ein Stift (5) befindet, der in eine erste Kurve (6) eingreift, die in einer mit der Längsführung (14) drehbar verbundenen Schwinge (7) angeordnet ist und daß sich an der Halterung (16) des anderen optischen Gliedes (2) ebenfalls ein Stift (10) befindet, der in eine zweite Kurve (9) in der Schwinge (7) eingreift und das optische Glied (2) relativ zum optischen Glied (1) bewegt.

5. IR-Pankrat nach Anspruch 4, dadurch gekennzeichnet, daß an der Trommel (3) ein Stellungsgeber (11) zum Regeln des zeitlichen Ablaufes der Verstellungen der optischen Glieder (1, 2) vorgesehen ist.

6. IR-Pankrat nach Anspruch 5, dadurch gekennzeichnet, daß der Durchmesser der Trommel (3) so bemessen ist, daß eine 3/4 Umdrehung dem gesamten Verstellbereich des optischen Gliedes (1) entspricht.

Fig.1

Fig.2